# EUROPEAN PATENT APPLICATION

(11) **EP 1 933 415 A1**
(43) Date of publication of application: **18.06.2008**
(21) Application number: 07121196.5
(22) Date of filing: 21.11.2007
(51) Int. Cl.: H01Q 1/44, H01Q 15/00, G01P 15/00, H01P 1/203

(54) **Electromagnetic bandgap motion sensor device and method for making same**

(30) Priority: 14.12.2006 US 639001
(71) Applicant: Delphi Technologies, Inc., Troy, Michigan 48007 (US)
(72) Inventor: Berlin, Carl W., West Lafayette, IN 47906 (US); Nair, Deepukumar M., Christiansburg, VA 24073 (US); Zimmermann, David W., Fishers, IN 46038 (US); Sarma, Dwadasi H.R., Kokomo, IN 46902 (US)
(74) Representative: Denton, Michael John

(57) **Abstract**

A high-frequency Electromagnetic Bandgap (EBG) motion sensor device (70), and a method (100) for making such a device (70) are provided. The device (70) includes a substantially planar substrate (72) including multiple conducting vias (76) forming a periodic lattice in the substrate (72). The vias (76) extend from the lower surface of the substrate (72) to the upper surface of the substrate (72). The device (70) also includes a movable defect (83) positioned in the periodic lattice. The movable defect (83) is configured to move relative to the plurality of vias (76). A resonant frequency of the EBG motion sensor device (70) varies based on movement of the movable defect (83).

## Description

### Technical Field

The present invention generally relates to Electromagnetic Bandgap (EBG) devices, and more particularly, to EBG devices having motion and position detection capability.

### Background of the Invention

EBG devices are devices generally having an ability to suppress and filter electromagnetic energy. EBG devices are often used to help suppress switching noise and electromagnetic radiation in printed circuit boards (PCBs) and packages containing electronic devices. Such devices are also sometimes used to improve the performance of planar antennas by reducing cross-coupling between antenna array elements through surface waves, and by suppressing and directing radiation. EBG devices can be useful in other active and passive devices and applications such as oscillators, waveguides, transmission lines, amplifiers, filters, power combining circuits, phased arrays, mixers, and microwave components and devices.

A typical EBG device generally has a periodic structure, such as for example, a lattice, that is made up of periodic perturbations. These periodic perturbations, also known as vias, can take the form of holes or dielectric or metal rods or posts. Often an EBG device takes the form of a uniform substrate material with metal on both sides creating a parallel plate. The substrate between the parallel plates is typically loaded with metal or dielectric rods or patches that form the periodic perturbations.

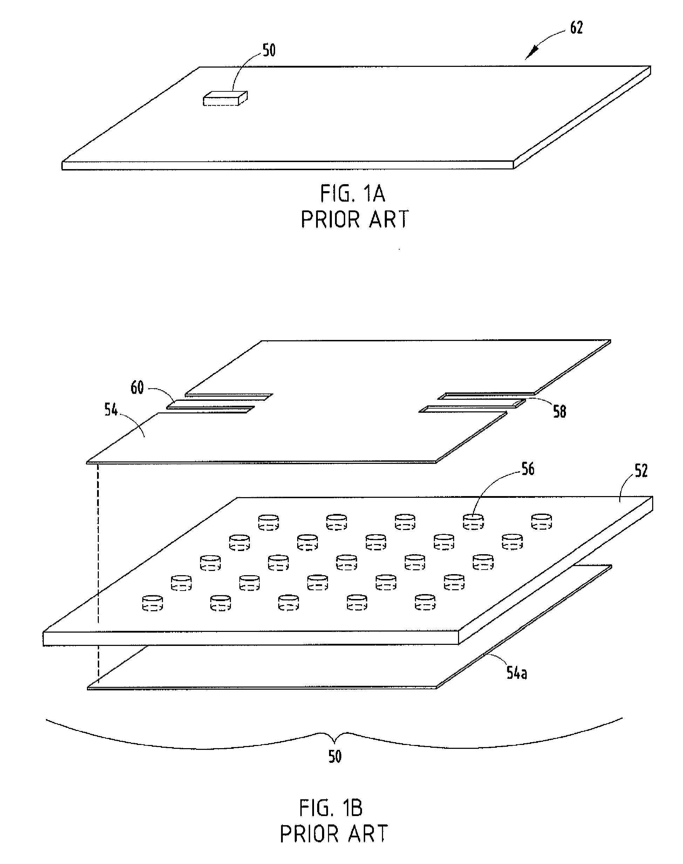

Fig. 1A provides an example of a conventional EBG device 50 located in a printed circuit board (PCB) 62. Fig. 1B provides an enlarged view of the EBG device 50. As shown, EBG device 50 has a dielectric layer 52 positioned between two ground planes 54 and 54a. Embedded in dielectric layer 52 are conductive vias 56 in a regular periodic pattern. Conductive vias 56 are typically formed from metal or a metal alloy. EBG device 50 is also shown having a coplanar waveguide input 58, and a coplanar waveguide output 60. In operation, the periodic pattern of conductive vias 56 acts to filter the coplanar waveguide input 58 before the signal is output at the coplanar waveguide output 60.

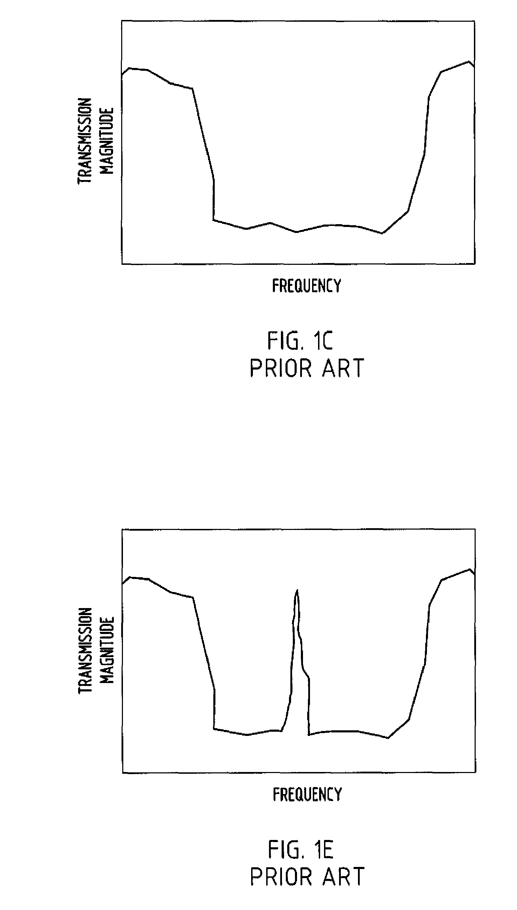

A typical EBG device 50 functions to block or suppress the propagation of electromagnetic radiation that falls within a certain defined frequency band known as a stopband or bandgap. The EBG device 50 can be characterized by its stopband/bandgap characteristics. These can include the width of the stopband/bandgap and the location in the frequency spectrum of the stopband/bandgap. For a given EBG device 50, the characteristics of the stopband/bandgap are generally determined by the physical characteristics and location of the periodic perturbations or conductive vias 56 in the device. The overall effect of the conductive vias 56 in an EBG device 50 is to create a filter that blocks electromagnetic energy in a certain frequency range from propagating in the substrate and on the surface of the substrate. Characteristics of the perturbations, or conductive vias 56, that can determine the bandgap characteristics include the spacing of the perturbations, the size of the perturbations, and the material used to create the perturbations. By choosing certain materials, sizes, and locations, the width and frequency location of the bandgap can be selected. Fig. 1C generally illustrates the transmission characteristics associated with the conventional EBG device 50. As can be seen, the conventional EBG device 50 will typically pass certain frequency ranges (those above and below the bandgap), and will attenuate frequencies that fall within the bandgap. As seen in Fig. 1C, the bandgap is bounded on the high end by an upper bandgap frequency above which signals are not significantly attenuated.

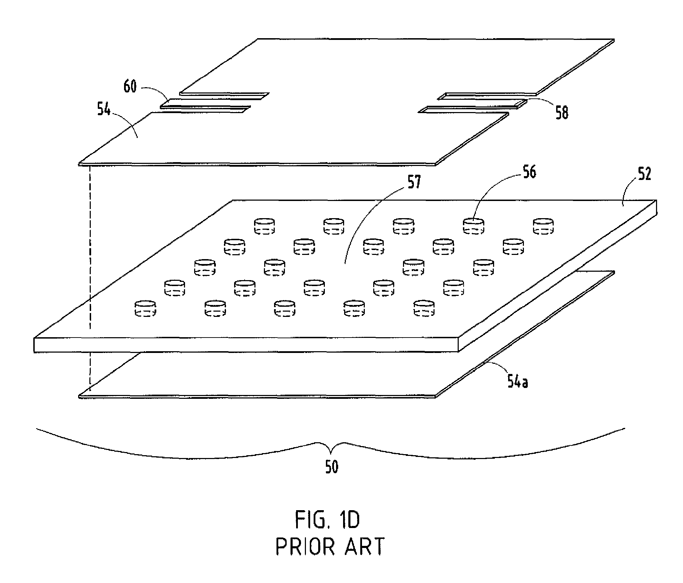

Conventional EBG devices discussed above can also be formed to allow some frequencies of electromagnetic energy within the bandgap to propagate. This is commonly accomplished by including defects, called defect resonators, in the EBG structure when it is manufactured. These defect resonators are interruptions or defects in the symmetry of the otherwise regular pattern of periodic perturbations 56 in the EBG device 50. For example, in an EBG device 50 including a periodic pattern of perturbations that are conductive vias 56, a defect could be formed by not including one of the conductive vias in the periodic pattern when the EBG device is manufactured. In another example involving a single substrate plane with a periodic pattern of via apertures filled with a dielectric material, a defect could be formed by not filling one of the via apertures. Fig. 1D generally illustrates an EBG device including a defect 57 in the periodic pattern of perturbations that are conductive vias 56.

In operation, a defect resonator in an EBG device 50 typically creates an area of resonance in the EBG device 50 by localizing energy within the structure, allowing transmission of a narrow frequency within the stopband or bandgap of the EBG device 50. In effect, an EBG device 50 formed with a defect resonator typically acts as a high-Q filter, suppressing frequencies within the bandgap except for those resonated by defects. Fig. 1E provides a general illustration of the frequency characteristics of the conventional EBG device 50 having a defect resonator. As can be seen, an EBG device 50 having a defect resonator will typically allow some frequencies within the bandgap to pass through the EBG device without being significantly attenuated. The frequencies within the bandgap at which signals pass through the EBG device 50 having a defect resonator without being significantly attenuated are referred to as resonant frequencies.

Characteristics of EBG devices with and without defect resonators are typically selected prior to the manufacturing of the EBG devices. For example, the pattern of periodic perturbations fixed in an EBG substrate, and the fixed location of defects in the substrate, are typically selected so that the resulting EBG device will have a specific fixed band gap and resonant frequency. While fixed band gap and resonant frequencies can be advantageous in some applications, it is desirable and advantageous in other applications to provide for bandgap devices having band gaps and or resonant frequencies that vary in response to stimulus. It is also desirable to provide for methods for producing such devices.

### Summary of the Invention

According to one aspect of the present invention, an Electromagnetic Bandgap (EBG) motion sensor device is provided. The device includes a substantially planar substrate including multiple conducting vias forming a periodic lattice in the substrate. The vias extend from the lower surface of the substrate to the upper surface of the substrate. The device also includes a movable defect positioned in the periodic lattice. The movable defect is configured to move relative to the plurality of vias. A resonant frequency of the Electromagnetic Bandgap (EBG) motion sensor device varies based on movement of the movable defect.

According to another aspect of the present invention, an Electromagnetic Bandgap (EBG) motion sensor device is provided. The device includes a substantially planar substrate including multiple conducting vias forming a periodic lattice in the substrate. The vias extend from the lower surface of the substrate to the upper surface of the substrate. The device further includes an upper ground plane positioned on the upper surface of the substrate and in contact with the vias. A coplanar waveguide is positioned in at least one of the substrate and upper ground plane. The device also includes a lower ground plane positioned on the lower surface of the substrate and in contact with the vias. A hole extends through the upper ground plane, the substrate, and the lower ground plane. The device still further includes a movable defect extending into the hole and into the periodic lattice. The movable defect is configured to move relative to the plurality of vias. A resonant frequency of the Electromagnetic Bandgap (EBG) motion sensor device varies based on movement of the movable defect.

According to yet another aspect of the present invention, a method for fabricating an Electromagnetic Bandgap (EBG) motion sensor device is provided. The method includes the steps of providing a substrate and arranging a periodic lattice of conducting vias in the substrate. The vias extend from the bottom of the substrate to the top of the substrate. The method further includes the steps of providing a movable defect in the periodic lattice of the substrate. The movable defect is configured to move relative to the vias. A resonant frequency of the Electromagnetic Bandgap (EBG) motion sensor device varies based on movement of the movable defect.

These and other features, advantages and objects of the present invention will be further understood and appreciated by those skilled in the art by reference to the following specification, claims and appended drawings.

### Brief Description of the Drawings

The present invention will now be described, by way of example, with reference to the accompanying drawings, in which:
Fig. 1A is a perspective view illustrating a conventional Electromagnetic Bandgap device on a circuit board substrate;
Fig. 1B is an enlarged exploded view of the conventional Electromagnetic Bandgap device;
Fig. 1C is a waveform diagram illustrating a bandgap associated with the Electromagnetic Bandgap device shown in Fig. 1B;
Fig. 1D is an enlarged exploded view of a conventional Electromagnetic Bandgap device having a defect resonator;
Fig. 1E is a waveform diagram illustrating a bandgap and resonant frequency associated with the Electromagnetic Bandgap device of Fig. 1D;
Fig. 2A is a perspective view illustrating an Electromagnetic Bandgap motion sensor device, according to one embodiment of the present invention;
Fig. 2B is an enlarged exploded view of the Electronic Bandgap motion sensor of Fig. 2A; and
Fig. 3 is a flow diagram generally illustrating a method for making an Electromagnetic Bandgap motion sensor device, according to one embodiment of the present invention.

### Description of the Preferred Embodiments

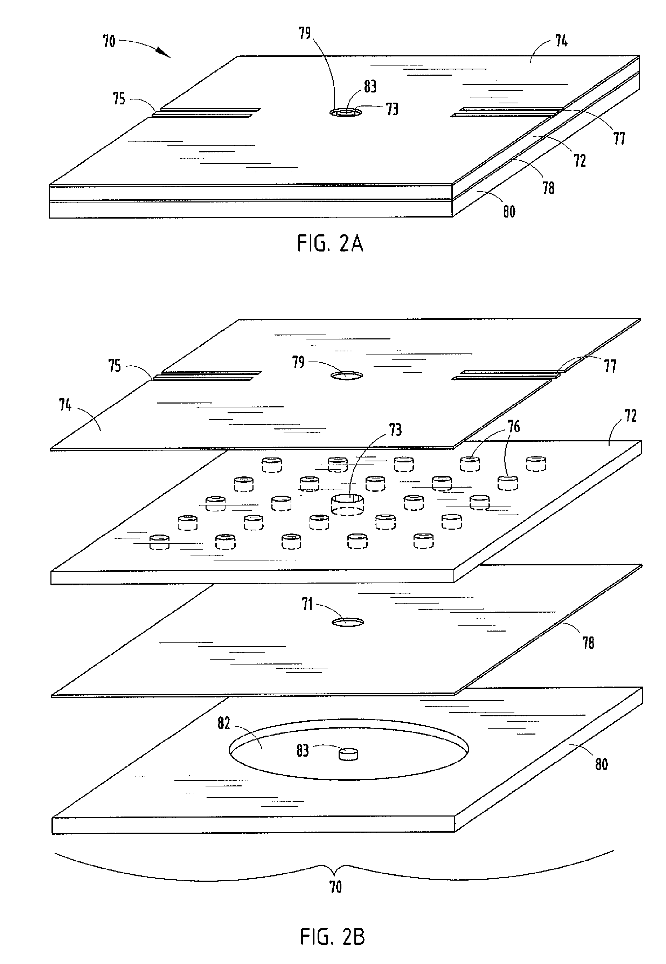

Referring to Figs. 2A and 2B, an Electromagnetic Bandgap (EBG) motion sensor device 70 is shown including a planar substrate 72. As shown, planar substrate 72 includes a periodic lattice of vias 76 embedded in planar substrate 72. In the present embodiment, planar substrate 72 is made of low-temperature co-fired ceramic (LTCC), and the periodic lattice of vias 76 are conductive vias formed in the shape of columns or rods. Planar substrate 72 has a lower surface and an upper surface, and conductive vias 76, formed in planar substrate 72, extend from the lower surface of planar substrate 72 to the upper surface of planar substrate 72. More specifically, lower surfaces of the conducting vias 76 are exposed on the lower surface of planar substrate 72, and upper surfaces of conductive vias 76 are exposed on the upper surface of planar substrate 72. As shown, the conductive vias 76 are in the form of cylindrical columns that have a height equal to the thickness of planar substrate 72.

In alternate embodiments, planar substrate 72 may be formed from FR4, or other materials used to form printed circuit boards (PCBs), or from other dielectric material. It should also be appreciated that in alternate embodiments, the conductive vias 76 formed in planar substrate 72 may be in shapes other than columns or rods, and may be formed of material other than conducting material, such as, for example, a dielectric material.

In addition to conductive vias 76, planar substrate 72 is also shown including a hole 73. In the present embodiment, hole 73 extends through the substrate 72 from the top of the substrate 72 to the bottom of the substrate 72, and is located in the periodic lattice of vias in a location that is approximately the same as the location in which a conductive via 76 would normally be found if the hole 73 were not present in substrate 72. As shown, the hole is larger in diameter than the conductive vias 76 of the substrate 72. Although in the present embodiment, the hole is cylindrical in shape, it should be appreciated that in alternate embodiments, the hole may have a shape that is other than cylindrical, and that in other alternate embodiments, the hole may have various sizes.

Device 70 also includes a lower ground plane 78 having upper and lower surfaces, and having its upper surface positioned adjacent to, and in contact with, the lower surface of planar substrate 72. It should be appreciated that the lower exposed conductive surfaces of conductive vias 76 are in contact with the upper surface of lower ground plane 78. Lower ground plane 78 is also shown including a hole 71. In the present embodiment, hole 71 extends through the lower ground plane 78 from the top of the lower ground plane 78 to the bottom of the lower ground plane 78. As shown, the hole 71 is located in the lower ground plane 78 in a location that is approximately the same as the location of the hole 73 in the substrate 72, such that the holes 71 and 73 align with each other. As shown, the hole 71 is approximately the same size as the hole 73 in the substrate 72. Although in the present embodiment, the hole 71 is round in shape, it should be appreciated that in alternate embodiments, the hole 71 may have a shape that is other than round, such that the shape of the hole 71 in lower ground plane 78 is approximately the same as the shape of the hole 73 in substrate 72. In still other alternate embodiments, the hole 71 in the lower ground plane 78 may have other sizes and shapes. In the present embodiment, the lower ground plane 78 is made of a copper alloy. In alternate embodiments, lower ground plane 78 may be made from electrically conducting material other than a copper alloy.

Device 70 further includes an upper ground plane 74 having upper and lower surfaces, and having its lower surface positioned adjacent to, and in contact with, the upper surface of planar substrate 72. It should be appreciated that the upper exposed conductive surfaces of conductive vias 76 are in contact with the lower surface of upper ground plane 74. Upper ground plane 74 is also shown including a hole 79. In the present embodiment, hole 79 extends through the upper ground plane 74 from the top of the upper ground plane 74 to the bottom of the upper ground plane 74. As shown, the hole 79 is located in the upper ground plane 74 in a location that is approximately the same as the location of the hole 73 in the substrate 72, such that the holes 73 and 79 align with each other. As shown, the hole 79 is approximately the same size as the hole in the substrate 72. Although in the present embodiment, the hole 79 is round in shape, it should be appreciated that in alternate embodiments, the hole 79 may have a shape that is other than round, such that the shape of the hole 79 in upper ground plane 74 is approximately the same as the shape of the hole 73 in substrate 72. In still other alternate embodiments, the hole 79 in the upper ground plane 74 may have other sizes and shapes. In the present embodiment, the upper ground plane 74 is made of a copper alloy. In alternate embodiments, upper ground plane 74 may be made from electrically conducting material other than a copper alloy. In the present embodiment, as illustrated in Fig. 2B, the holes 79, 73 and 71 align with each other such that access is provided through the holes from the top of upper ground plane 74 to the bottom of lower ground plane 78.

In the present embodiment, upper ground plane 74 also includes a coplanar waveguide, denoted by items 75 and 77 of Figs. 2A and 2B, formed in the upper ground plane 74. The coplanar waveguide includes a coplanar waveguide input 75 and a coplanar waveguide output 77. The resulting EBG device 70 will have a bandgap with respect to signals provided at the coplanar waveguide input 75, and will exhibit a resonant frequency with respect to input signals as a result of the hole formed in the substrate 72. One skilled in the art will appreciate that the hole acts as a defect hole in the periodic matrix of conductive vias 76, such that the device 70 is an EBG device with a defect resonator. In operation, frequencies of a signal provided at coplanar waveguide input 75 that fall within the frequency range of the bandgap of EBG device 70 will be attenuated as they pass through EBG device 70 from input 75 to output 77. Frequencies occurring at the resonant frequency of EBG device 70 will resonate as they pass through EBG device 70 from input 75 to output 77.

Device 70 is also shown including a backplate 80 having an upper surface and a lower surface. Backplate 80 includes a recess 82 formed in the backplate 80. Recess 82 includes a post 83, also referred to as a defect 83, extending upward from the recess 82. In the present embodiment, post 83 is a cylindrical rod. In alternate embodiments, post 83 may have other shapes. In the present embodiment, backplate 80 is formed from a copper alloy, and recess 82 and post 83 have been formed by removing material from backplate 80 to form the recess 82 while leaving post 83 extending upward from the bottom of the recess 82. In alternate embodiments, backplate 80, recess 82, and post 83 may be formed from other materials, such as, for example, dielectric material.

As shown, backplate 80 is positioned adjacent to lower ground plane 78 such that the upper surface of backplate 80 is in contact with the lower surface of lower ground plane 78, and such that post 83 is aligned with, and extends upward into, the holes 71 and 73. In the present embodiment, the lower surface of recess 82 is formed such that it is thin enough to allow the lower surface of recess 82, and therefore the post 83, to deflect or bend relative to the remaining portion of backplate 80. By positioning backplate 80 such that post 83 extends into the hole 73, post 83 further interrupts the periodic matrix of conductive vias 76 formed in substrate 72, acting as a defect resonator. One skilled in the art will appreciate that the extension of post 83 into the hole 73 alters the defect resonator characteristics of the device 70, such that the resonant frequency of the device 70 without the post 83 inserted into the hole 73 is different from the resonant frequency of the device 70 with the post 83 inserted into the hole 73.

It should be appreciated that when the recess 82 of device 70 is caused to deflect for any reason, such as for example, by being exposed to pressure on the lower surface of the recess 82, the post 83 will also deflect, and will move relative to the substrate 72 and the conductive vias 76 therein. Because the post 83, also referred to as defect 83, is able to move relative to the substrate 72 and/or conductive vias 76, post 83 is a movable defect 83 and acts as a movable defect resonator in the device 70. When the post 83 changes position relative to the substrate 72 and/or the conductive vias 76, the signal-altering characteristics of device 70 will change based on the position and/or motion of post 83. For example, in the present embodiment, when the post 83 changes position relative to the substrate 72, the resonant frequency of device 70 will change. It should be appreciated that movement of the post 83 relative to the substrate 72 and/or the conductive vias 76 may alter the resonant frequency, the amplitude of signals passed at various frequencies, and other characteristics of the signals associated with device 70.

Although in the present embodiment, the movable defect 83 is a conductive post extending from the surface of a recess 82 in a backplate 80, it should be appreciated that in alternate embodiments, the movable defect 83 may be formed in other shapes, and may be positioned relative to the hole 73 of device 70 by means other than a recess 82 of a backplate 80. One skilled in the art will appreciate other methods for attaching movable defect 83 to device 70 such that movable defect 83 is able to move within hole 73 of device 70 relative to substrate 72 and conductive vias 76. It should also be appreciated that in alternate embodiments, movable defect 83 may be caused to move relative to substrate 72 and conductive vias 76 by means other than pressure. For example, in alternate embodiments, movable defect 83 may be caused to move by physical acceleration and/or deceleration of the device 70, movement of the device 70, exposure of the device 70 to RF energy, exposure of the device 70 to magnetic fields, exposure of the device 70 to electricity, thermal energy applied to the device 70, and other stimulus applied to the device 70 or to the movable defect 83.

Although in the present embodiment, one movable defect is utilized, it should be appreciated that in alternate embodiments, multiple movable defects could be employed in a device 70. Although in the present embodiment, device 70 includes a hole 73 extending completely through the substrate 72 in which a movable defect 83 is positioned, it should be appreciated that in alternate embodiments, device 70 may include a recess in the substrate 72 that does not extend completely through the substrate, and into which a movable defect 83 is positioned. It should also be appreciated that although the in the present embodiment, movable defect 83 primarily moves up and down into the hole 73, in alternate embodiments, movable defect 83 may move side-to-side in the hole 73, rotationally in the hole 73, or in any other fashion in hole 73, provided that movable defect 83 is configured to change its position or orientation relative to the conductive vias 76.

One skilled in the art will appreciate that by comparing the waveform characteristics of signals associated with device 70 when movable defect 83 is in various positions, it is possible to determine characteristics of the motion of defect 83, such as, for example, the position of defect 83, how much defect 83 has moved, the velocity of defect 83, the lateral acceleration of defect 83, and the angular acceleration of defect 83. This information may be further used to implement various devices with device 70, such as, for example, pressure sensors, accelerometers, yaw sensors, proximity sensors, occupant sensors, thermal sensors, rotation sensors and switches.

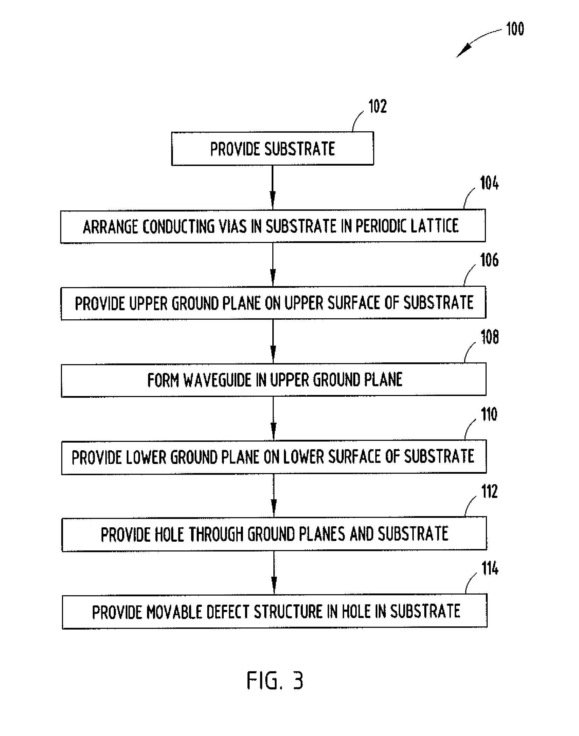

Referring to Fig. 3, a method 100 for making an EBG motion sensor device is provided. In a first step 102 of the method, a substrate is provided. In the present embodiment, the substrate is made of low-temperature co-fired ceramic. In an alternate embodiment, the substrate is made of FR4 or other materials used to fabricate printed circuit boards (PCBs), or other dielectric material. In a second step 104 of the method, conducting vias are arranged in the substrate in a periodic matrix or lattice. In an alternate embodiment, the vias are made of a dielectric material. In a third step 106 of the method, an upper ground plane is provided on the upper surface of the substrate. In the present embodiment, the upper ground plane is made of a copper alloy. In alternate embodiments, the upper ground plane is made of other conducting material. In a fourth step 108, a waveguide is formed in the upper ground plane. In a fifth step 110 of the method, a lower ground plane is provided on the lower surface of the substrate. In the present embodiment, the lower ground plane is made of a copper alloy. In alternate embodiments, the lower ground plane is made of other conducting material. In a sixth step 112 of the method, a hole is provided through the upper and lower ground planes and the substrate. In a seventh step 114 of the method, a movable defect is positioned in the hole in the substrate. The movable defect is configured to be moveable in at least one of position and orientation relative to the vias and substrate. The resulting structure has frequency characteristic that vary as a function of the position and motion of the movable defect.

As described above, the invention advantageously provides for Electromagnetic Bandgap (EBG) devices having band gaps and resonant characteristics that vary in response to stimulus applied to the devices. The flexibility of the invention allows it to be utilized in a wide variety of practical applications such as, for example, pressure sensors and accelerometers.

The above description is considered that of the preferred embodiments only. Modifications of the invention will occur to those skilled in the art and to those who make or use the invention. Therefore, it is understood that the embodiments shown in the drawings and described above are merely for illustrative purposes and not intended to limit the scope of the invention, which is defined by the following claims as interpreted according to the principles of patent law, including the doctrine of equivalents.

## Claims

1. An Electromagnetic Bandgap (EBG) device (70), comprising:
a substantially planar substrate (72) having an upper surface and a lower surface;
a plurality of discrete vias (76) comprising conducting material and extending from the lower surface of said substantially planar substrate (72) through said substantially planar substrate (72) to the upper surface of said substantially planar substrate (72), said plurality of vias (76) forming a periodic lattice in said substantially planar substrate (72); and
a movable defect (83) positioned in the periodic lattice of said substantially planar substrate (72) and configured to move relative to at least one of said plurality of vias (76) and said substantially planar substrate (72), wherein movement of said movable defect (83) causes a resonant frequency of the Electromagnetic Bandgap (EBG) device (70) to vary.

2. The Electromagnetic Bandgap (EBG) device (70) of claim 1, further comprising an upper ground plane (74) positioned on the upper surface of said substantially planar substrate (72), said upper ground plane (74) in contact with said plurality of vias (76) of said substantially planar substrate (72).

3. The Electromagnetic Bandgap (EBG) device (70) of claim 2, further comprising a coplanar waveguide (75,77) positioned in at least one of said substantially planar substrate (72) and said upper ground plane (74).

4. The Electromagnetic Bandgap (EBG) device (70) of claim 3, wherein said vias (76) of said substantially planar substrate (72) have essentially the same shape and size.

5. The Electromagnetic Bandgap (EBG) device (70) of claim 3, wherein said vias (76) of said substantially planar substrate (72) comprise conducting rods (76) approximately cylindrical in shape, said conducting rods (76) having lengths approximately perpendicular to the upper and lower surfaces of said substantially planar substrate (72).

6. The Electromagnetic Bandgap (EBG) device (70) of claim 5, wherein said substantially planar substrate (72) further comprises at least one of a recess (73) in said substrate and hole (73) in said substrate (72), and wherein said movable defect (83) is positioned at least partially in at least one of said recess (73) and said hole (73).

7. The Electromagnetic Bandgap (EBG) device (70) of claim 5, wherein said substantially planar substrate (72) further comprises a hole (73) and wherein said upper ground plane (74) comprises a hole (79), said holes (73,79) positioned such that they overlap each other, and wherein said movable defect (83) is positioned at least partially in the hole (73) of said substantially planar substrate (72).

8. The Electromagnetic Bandgap (EBG) device (70) of claim 7, further comprising a lower ground plane (78) positioned on the lower surface of said substantially planar substrate (72), said lower ground plane (78) in contact with said plurality of vias (76) of said substantially planar substrate (72).

9. The Electromagnetic Bandgap (EBG) device (70) of claim 8, wherein said lower ground plane (78) comprises a hole (71), said lower ground plane hole (71) positioned such that it overlaps the hole (73) of said substantially planar substrate (72), and wherein said movable defect (83) is positioned at least partially in the hole (73) of said substantially planar substrate (72) and the hole (73,71) of at least one of said upper ground plane (74) and said lower ground plane (78).

10. The Electromagnetic Bandgap (EBG) device (70) of claim 1, wherein said movable defect (83) comprises a conducting rod (83) approximately cylindrical in shape, said conducting rod (83) having a length, said conducting rod (83) being positioned such that its length is approximately perpendicular to the upper and lower surfaces of said substantially planar substrate (72).

11. The Electromagnetic Bandgap (EBG) device (70) of claim 9 wherein said movable defect (83) comprises a conducting rod (83) approximately cylindrical in shape, said conducting rod (83) having a length, said conducting rod (83) being positioned such that its length is approximately perpendicular to the upper and lower surfaces of said substantially planar substrate (72), said conducting rod (83) further being positioned such that it extends through a hole (79,71) in at least one of said upper ground plane (74) and said lower ground plane (78) and into the hole (73) in said substantially planar substrate (72).

12. The Electromagnetic Bandgap (EBG) device (70) of claim 1, wherein said substantially planar substrate (72) comprises dielectric material.

13. The Electromagnetic Bandgap (EBG) device (70) of claim 12, wherein said substantially planar substrate (72) comprises low-temperature co-fired ceramic.

14. The Electromagnetic Bandgap (EBG) device (70) of claim 1, wherein said movable defect (83) comprises conducting material, has a cylindrical shape, and is coupled to the EBG device (70) such that it is able to move at least one of horizontally, vertically, and rotationally relative to said plurality of vias (76).

15. A method (100) for fabricating an Electromagnetic Bandgap (EBG) device (70), comprising the steps of:
providing a substantially planar substrate (72) having upper and lower surfaces;
arranging conducting vias (76) in the substantially planar substrate (72) in a periodic lattice, wherein the conducting vias (76) extend from the bottom of the substrate (72) to the top of the substrate (72); and
positioning a movable defect (83) in the periodic lattice of the substantially planar substrate (72), wherein the movable defect (83) is configured to move relative to at least one of the plurality of vias (76) and the substantially planar substrate (72), and wherein movement of said movable defect (83) causes a resonant frequency of the EBG device (70) to vary.

16. The method (100) of claim 15, further comprising the step of providing an upper ground plane (74) on the upper surface of the substantially planar substrate (72), such that the upper ground plane (74) is in contact with the conducting vias (76) of the substantially planar substrate (72).

17. The method (100) of claim 16, further comprising the step of forming a coplanar waveguide (75,77) in the upper ground plane (74).

18. The method (100) of claim 17, further comprising the step of providing a lower ground plane (78) on the lower surface of the substantially planar substrate (72), such that the lower ground plane (78) is in contact with the conducting vias (76) of the substantially planar substrate (72).

19. The method (100) of claim 18, further comprising the step of providing an aligned hole (79,73,71) through the upper ground plane (74), substantially planar substrate (72), and lower ground plane (78), wherein the movable defect (83) extends through at least one of the holes (79) through the upper ground plane (74) and the hole (71) through the lower ground plane (78) and into the hole (73) in the substantially planar substrate (72).

20. The method (100) of claim 15, wherein the substantially planar substrate (72) comprises low-temperature co-fired ceramic, and wherein the movable defect (83) comprises a conducting rod (83).
